(19) **Europäisches Patentamt**
**European Patent Office**
**Office européen des brevets**

(11) **EP 2 924 888 A1**

(12) **EUROPEAN PATENT APPLICATION**

(43) Date of publication:
**30.09.2015 Bulletin 2015/40**

(51) Int Cl.:
**H04B 7/06** (2006.01)  **H04B 7/08** (2006.01)
**H04B 7/02** (2006.01)

(21) Application number: **14305441.9**

(22) Date of filing: **27.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Baracca, Paolo**
 **70435 Stuttgart (DE)**
• **Aziz, Danish**
 **70435 Stuttgart (DE)**

(74) Representative: **Huber, Meik et al**
 **Alcatel-Lucent Deutschland AG**
 **Intellectual Property Business Group**
 **Lorenzstraße 10**
 **70435 Stuttgart (DE)**

(54) **RF path management for energy efficient cellular newtworks**

(57) The present invention relates to a method for communication in a cellular communication network. The cellular communication network comprises at least one central unit and at least two base stations. At least one base station comprises multiple antennas and multiple RF paths feeding the antennas for MIMO transmission. At the central unit, the minimum number of RF paths in a base station to achieve a target performance metric is determined and the determined minimum number is transmitted to the base station. The present invention further relates to a base station and a cellular communication system.

**Fig. 1**

Printed by Jouve, 75001 PARIS (FR)

**Description**

FIELD OF THE INVENTION

The present invention relates generally to the field of communication systems and, more particularly, to RF path management in base stations and systems in cellular communication systems.

BACKGROUND OF THE INVENTION

This section introduces aspects that may be helpful in facilitating a better understanding of the invention. Accordingly, the statements of this section are to be read in this light and are not to be understood as admission about what is in the prior art.

Energy efficiency is one of the important metrics for future wireless networks, e.g. for future 5th Generation (5G) systems. A significant amount of power consumed by a wireless transmission node, e.g. a base station, is related to power amplifiers and pre-amplifier circuits. The power consumed by power amplifiers depends upon the total transmission power. Further RF components, especially active elements in the RF path, have also significant power consumption. Passive elements in the RF path introduce losses which need to be compensated by an amplifier and thus, indirectly also increase the power consumption significantly. The pre-amplifier circuit power mainly consists of the power consumed by the number of active RF paths. For a node equipped with multiple antennas, the number of active RF paths may be less than or equal to the number of transmit antennas. Hence for a given transmission power, the number of active RF paths governs the power consumption of a transmitting node and thus the energy efficiency of the wireless access network.

Existing solutions for energy efficiency are based on long term traffic dynamics. With the help of data traffic statistics, following solutions are known:

- Switching Cells ON/OFF
- Bandwidth Adaptation (Based on controlling the Power Amplifier)

These solutions are based on longer time intervals like days or hours. They do not provide adequate mechanism for reacting to short term traffic dynamics, e.g. on transmission frame basis.

Some of the solutions target on the selection of RF paths and work on short time intervals. However, these solutions rely on channel diversity to achieve the desired rate with minimum energy per bit. For this purpose, these solutions perform an exhaustive search over all the possible configurations of the tuple {Transmit Power, RF paths, Transmit Antennas} to find out the optimum combination. This huge effort makes such searches impractical for complex cellular systems.

SUMMARY OF THE INVENTION

It is an object of the invention to minimize the energy consumption in a wireless network for a given target performance metric.

The present invention concerns a method for communication in a cellular communication network. The cellular communication network comprises at least one central unit and at least two base stations. At least one base station comprises multiple antennas and multiple RF paths feeding the antennas for MIMO transmission. In the central unit, the minimum number of RF paths needed in a base station to achieve a target performance metric on the wireless MIMO channel is determined. The target performance metric is e.g. a target data rate or a target error rate or any other metric for the quality or speed of the transmission. A base station has a number of RF paths for providing corresponding signals to the antenna elements. In one embodiment, each antenna element is fed by a separate RF path. In one embodiment, multiple antenna elements share components of one RF path, e.g. baseband filter and mixers. The minimum number of RF paths needed within this context means the number of RF paths in a base station which are activated and used for signal processing. The determined minimum number of RF paths is transmitted to the base station. Thus, in the central unit, for each or some base stations, it is determined how many RF paths need to be active in order to achieve a certain performance metric. This is depending on different parameters, e.g. the number of terminals in the radiation area of a base station, the frequency, modulation scheme, external conditions like obstacles in the cell, interfering signals and so on. While determining the minimum number of RF paths needed in a base station, the inter cell interference is considered. Thus, when determining the minimum number of RF paths, it is assumed that the base stations are coordinated. When the determined minimum number of RF paths is transmitted to the base stations, also the coordination information is transmitted to the base stations. The method is advantageous in that only the needed RF paths are active and the RF paths not needed to achieve a certain data rate are switched off or in sleep mode. Thus, power consuming parts of the transmitter are reduced to the required number. On the other hand, if data rate requirements are increased, further RF paths are switched on and a higher data rate is achieved or more terminals can be served.

In one embodiment, determining at the central unit the minimum number of RF paths is based on at least one of channel state information and minimum and maximum number of possible RF paths in the node. The minimum number of RF paths is to be understood as the number of activated RF paths selected from the total number of RF paths available in a base station. These parameters directly influence the achievable data rate.. Thus, these parameters provide a relationship between active RF paths and achievable data rate.

In one embodiment, determining at the central unit the minimum number of RF paths is performed by executing at least the following steps: Computing precoders for a number of RF paths of a base station. These precoders are used to estimate the transmission rate between a terminal and the base station, i.e. the spectral efficiency. The transmission rate is the data rate which can be transmitted when these precoders are employed, considering all or at least part of the above mentioned parameters which influence the data rate. Then, the number of RF paths is reduced if the transmission rate estimation is above the target data rate. In one embodiment, these steps are performed recursively until the transmission rate estimation is below the target data rate. When decrementing the number of RF paths and performing a transmission rate analysis as described above, the critical number of RF paths is found, for which the target data rate cannot be achieved any longer. This number of RF paths is incremented by one, which gives the lowest possible number of RF paths in order to achieve the target data rate.

In one embodiment, the central unit is part of a base station in a cellular communication network. This base station performs regular base station operation like the other base stations in the cellular network and in addition performs the method of the central unit as described above.

In one embodiment, the number of antennas of a base station is equal to the number of RF paths in a base station.

In one embodiment, the cellular communication network is a heterogeneous network.

In one embodiment, determining at the central unit the minimum number of RF paths in a base station to achieve a target data rate is performed for each base station. This way, the cellular network is managed in an efficient way in order to achieve target data rates in each cell. In addition, interferences between cells can be considered. In one embodiment, several base stations are attached to one central unit and the minimum number of RF paths for these base stations are determined in the central unit. In one embodiment, precoders computed in the central unit for several base stations are coordinated in order to optimize the network performance and to reduce interference between neighboring cells. In one embodiment, more than one central unit is available in a cellular communication network, and groups of base stations are attached to the corresponding central units. In one embodiment, these more than one central units coordinate their results with each other.

The present invention further concerns a central unit in a cellular communication network. The cellular communication network comprises at least one central unit and at least two base stations. At least one base station comprises multiple antennas and multiple RF paths feeding the antennas for MIMO transmission. A base station has a number of RF paths for providing corresponding signals to the antenna elements. In one embodiment, each antenna element is fed by a separate RF path. In one embodiment, multiple antenna elements share components of one RF path, e.g. baseband filter and mixers. The central unit is provided with a minimum number of RF paths calculator for determining the minimum number of RF paths in a base station needed to achieve a target performance metric on the wireless MIMO channel. The target performance metric is e.g. a target data rate or a target error rate or any other metric for the quality or speed of the transmission. The minimum number of RF paths needed within this context means the number of RF paths in a base station which are activated and used for signal processing. Further, the central unit comprises a transmitter for transmitting the minimum number to a base station. The determined minimum number of RF paths is transmitted to the base station. Thus, in the central unit, the minimum number of RF paths calculator determines for each or some base stations how many RF paths need to be active in order to achieve a certain data rate. This is depending on different parameters, e.g. the number of terminals in the radiation area of a base station, the frequency, modulation scheme, external conditions like obstacles in the cell, interfering signals and so on. While determining the minimum number of RF paths needed in a base station, the inter cell interference is considered. Thus, when determining the minimum number of RF paths, it is assumed that the base stations are coordinated. When the determined minimum number of RF paths is transmitted to the base stations, also the coordination information is transmitted to the base station. This is advantageous in that the base station uses this information in order to activate only the needed RF paths and the RF paths not needed to achieve a certain data rate are switched off or stay in sleep mode. Thus, power consuming parts of the transmitter of the base station are reduced to the required number. On the other hand, if data rate requirements are increased, further RF paths are switched on and a higher data rate is achieved or more terminals can be served.

In one embodiment, the minimum number of RF paths calculator comprises a precoder calculator for computing precoders for a number of RF paths of a base station. Further, the minimum number of RF paths calculator comprises an estimator for estimating the transmission rate of the base station with the computed precoders. Further the minimum number of RF paths calculator comprises a decrementer for decrementing the number of RF paths if the transmission estimation is above a minimum rate.

In one embodiment, the minimum number of RF paths calculator further comprises a close loop computing circuit comprising at least the precoder calculator, the estimator and the decrementer for recursively computing precoders, estimating the transmission rate and decrementing the number of RF paths until the transmission rate estimation is below the minimum rate. Further, the minimum number of RF paths calculator comprises a determinator for determining the minimum number of RF paths as the actual number of RF paths plus one.

The present invention further concerns a base station in a cellular communication network. The cellular communication network comprises at least one central unit and at least two base stations. At least one base station comprises multiple antennas and multiple RF paths feeding the antennas for MIMO transmission. The base station comprises an input for receiving a minimum number of RF paths from a central unit. The minimum number of RF paths is determined in the central unit by using a target data rate. Further, the base station comprises a switching unit for selectively switching on and off one or more RF paths according to the received minimum number.

In one embodiment, the input of the base station for receiving a minimum number of RF paths from a central unit receives a minimum number of RF paths which is determined in the central unit by computing precoders for a number of RF paths of a base station, and by estimating the transmission rate of the base station with the computed precoders, and by reducing the number of RF paths if the transmission rate estimation is above a minimum rate.

In one embodiment, the central unit is part of the base station.

The present invention further concerns a system for communication in a cellular communication network comprising at least one central unit and at least two base stations as described above.

Further advantageous features of the embodiments of the invention are defined and are described in the following detailed description.

BRIEF DESCRIPTION OF THE DRAWINGS

Some embodiments of apparatus and methods in accordance with embodiments of the present invention are now described, by way of examples only, and with reference to the accompanying drawings, in which:

Fig. 1     schematically depicts a cellular communication network according to the invention

Fig. 2     schematically depicts a method performed in a central unit in a cellular communication network according to the invention

Fig. 3     show simulated mean cell rates

DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

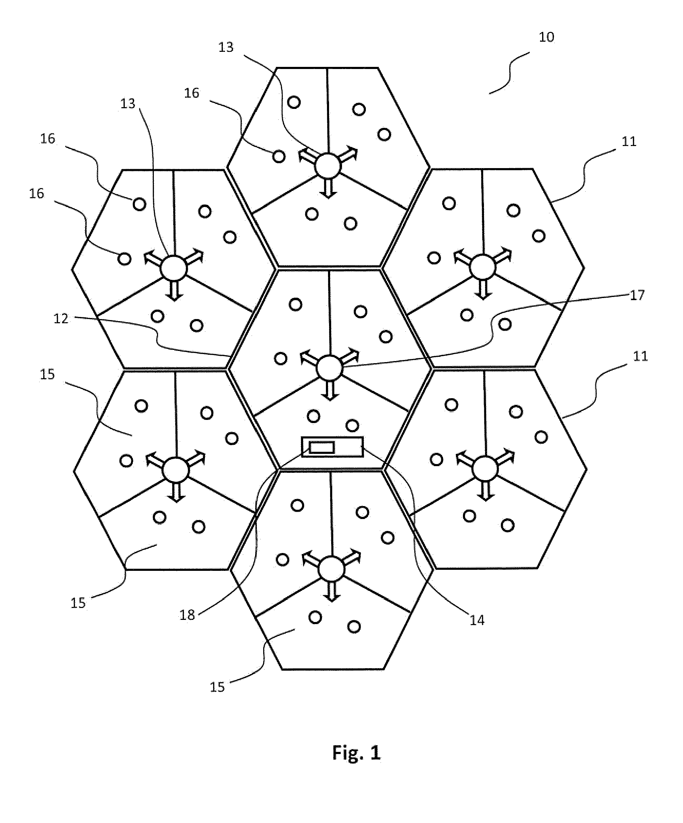

Fig. 1 schematically depicts a cellular communication network according to the invention. A network area 10 is covered by macro communication cells 11, 12. Each macro communication cell 11, 12 includes a macro cell base station 13, 17. In one embodiment, at least some of the macro cell base stations 13, 17 cover different geographical areas 15 in a cell. The geographical areas 15 may be served independent from each other by the macro cell base station 13, 17 by beamforming. In one embodiment, in some or all geographical areas 15 within a macro communication cell 11, 12, pico cell base stations 16 are located. User Equipments (not shown) which are located inside a geographical area 15 of a cell connect to the macro cell base station 13, 17 and/or the pico cell base station 16 of the cell 11, 12 for data transmission, e.g. by an LTE connection. At least one of the base stations 13, 16, 17 have beamforming capabilities in order to transmit and receive signals in a certain direction in the cell 11, 12. Thus, a macro cell base station 13, 17 comprises multiple antennas and multiple RF paths feeding the antennas for MIMO transmission. Using the beamforming capabilities, the geographical areas 15 of a macro communication cell 11, 12 are served by the macro cell base station 13, 17. This is schematically indicated in Fig. 1 by dividing the macro communication cells 11, 12 in different sectors. A central unit 14 is present in a master cell 12. In one embodiment, the function of the central unit 14 is implemented in the macro cell base station 17 of the master cell. The central unit 14 or the master cell base station 17 comprises a minimum number of RF paths calculator 18 to determine the minimum number of RF paths in a macro cell base station 13, 17 needed to achieve a target data rate in the corresponding cell 11, 12 as described in further detail below.

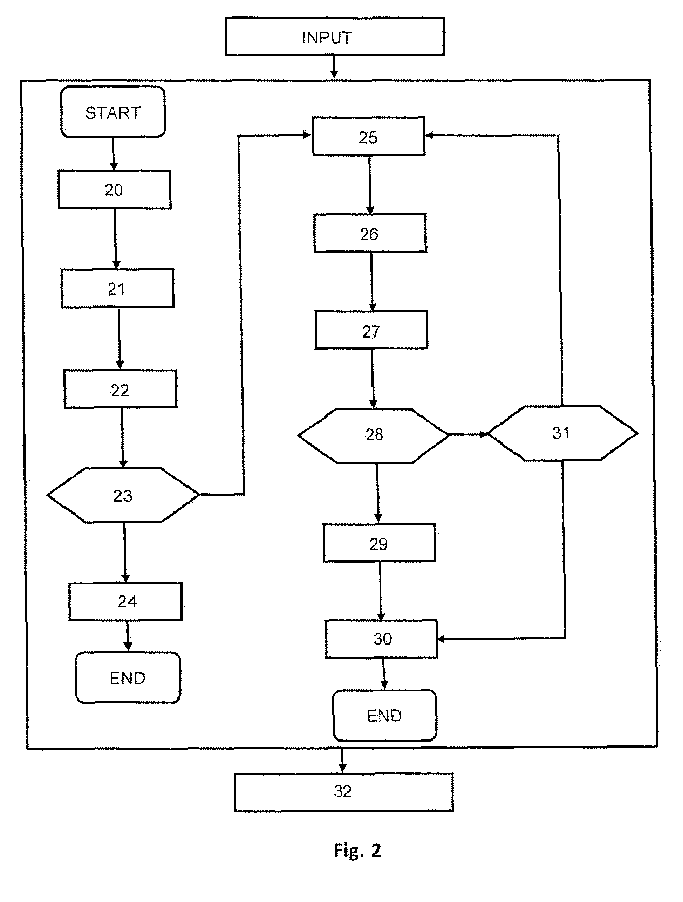

Fig. 2 schematically depicts a method performed in a central unit 14 or master cell base station 17 in a cellular communication network according to the invention.

Basis for selecting the minimum number of active RF paths in a certain macro cell base station 13, 17 are system parameters of the heterogeneous network and the envisaged performance parameter of the network, e.g. the minimum spectral efficiency Rmin, the minimum number of active RF paths Nmin available in a macro cell base station, the maximum number of active RF paths Nmax available in a macro cell base station, and the number of coordinated base stations Jc. For given conditions, the transmission data rate correlates to the spectral efficiency, and thus the spectral efficiency is in fact a measure for the transmission data rate which can be expected within a cell. In step 20, an index Ni is set to the maximum number of active RF paths Nmax available in a base station 13, 17. In step 21, precoders are computed for Ni active RF paths for at least one base station 13, 17. For an exemplary embodiment, the definition of precoders is described in more detail below. In step 22, the transmission rate of at least one base station 13, 17 is estimated in the central unit 14. The transmission rate corresponds to the spectral efficiency, which is described for an exemplary embodiment in more detail below. In step 23, it is determined if the estimated spectral efficiency satisfies the minimum requested spectral efficiency Rmin, and thus, the minimum requested transmission rate. If the estimated spectral efficiency does not satisfy the minimum request spectral efficiency Rmin when using the maximum number of active RF paths, the minimum requested spectral efficiency Rmin cannot be provided. Thus, in order to get as close as possible to the minimum requested spectral efficiency Rmin, all RF paths are employed, and the process of determining the minimum number of RF paths ends.

On the other hand, if in step 23 it determined that the estimated spectral efficiency satisfies or exceeds the minimum spectral efficiency Rmin, the index Ni is decreased by one in step 25. In step 26, precoders are computed for Ni active RF paths for at least one base station 13, 17, as decribed in more detail below. In step 27, the transmission rate of at least one base station 13, 17 is estimated in the central unit 14. The transmission rate corresponds to the spectral efficiency, which is described for an exemplary embodiment in more detail below. In step 28, it is determined if the estimated spectral efficiency is below the minimum requested spectral efficiency Rmin. If the estimated spectral efficiency is below the minimum requested spectral efficiency Rmin, the index Ni is increased by one in step 29 and the number of active RF paths in a base station 13, 17 needed is set to the number of the index Ni in step 30. On the other hand, if the estimated spectral efficiency is not below the minimum requested spectral efficiency Rmin, it is checked in step 31 if the index Ni is equal to the minimum number of active RF paths Nmin. If the index Ni is equal to the minimum number of active RF paths Nmin, the number of active RF paths needed is set to the number of the index Ni in step 31, which is equal to the minimum number of active RF paths Nmin in this case. If the index Ni is not equal to the minimum number of active RF paths Nmin, the index Ni is decreased by one in step 25. Further, steps 26, 27, 28 are performed again. After the number of active RF paths have been determined in step 30, the corresponding precoders which are computed in steps 21 or 26 and the number of active RF paths are provided for further use and processing.

Thus, the minimum number of RF paths in a base station 13, 17 to achieve a target data rate is determined in a recursive process by reducing the number of active RF paths, computing corresponding precoders and calculating the corresponding spectral efficiency until the desired parameters are reached.

The steps according to the method are described for an exemplary embodiment in the following. The base stations 13, 17 are coordinated by a central unit 14. The number of active RF paths is optimized by also exploiting the coordination, which allows coordinating the precoders used by different base stations 13, 17. Thus, when computing the precoders in steps 21 and 26 as described above, the interferences of the different base stations 13, 17 with respect to each other are taken into account.

In an exemplary embodiment, a cluster of K base stations, each equipped with $M_k$ antennas and with a maximum transmit power $P_k$, serving K single-antenna user equipments is considered. $h_{k,j} = [h_{k,j}(1), h_{k,j}(2),..., h_{k,j}(M_j)]$ denotes the $1 \times M_j$ channel between user equipment k and base station j. For sake of simplicity, it is assumed that only one user equipment is served by each base station 13, 17, in particular user equipment k is anchored to base station k, k = 1, 2,...,K.

In one embodiment, this setup uses a system employing a round robin scheduler. Frequency division duplex (FDD) is used, wherein each user equipment k first estimates the channels $h_{k,j}$, j = 1, 2,...,K, and then sends through the feedback channel all these vectors to its anchor base station k. The K baste stations of the cluster are coordinated by the central unit 14, which is responsible for determining the number of radio RF paths $m_k$ and the precoder $g_k^{(mk)}$ used by each base station k to serve its user equipment. In case that single stream transmission is employed, the precoder corresponds to a beamforming vector. In case that multi-stream transmission is employed, the precoder is a matrix.

For sake of simplicity, in a homogeneous scenario all the base stations 13, 17 have the same maximum transmit power, i.e., $P_k = P$, k = 1, 2,...,K, the same number of antennas, i.e., $M_k = M$, k = 1, 2,...,K, and the central unit 14 selects the same number of RF paths for all the base stations 13, 17, i.e., $m_k = m$, k = 1, 2,...,K.

According to one embodiment, the proposed scheme is applicable to more general setups, including heterogeneous networks, different kind of schedulers, different number of RF paths for each base station and multiple antenna user equipments.

When performing the inventive method, at least the following information is exchanged between the base stations 13, 17 and the central unit 14.

Each base station k forwards to the central unit 14 channel vectors $h_{k,j}$, j = 1, 2,...,K, previously obtained from the feedback of user equipment k.

The central unit 14, after collecting all the channels $h_{k,j}$, k, j = 1, 2,...,K, optimizes the number of RF paths m and the precoders $g_k^{(m)}$, k = 1, 2,...,K.

The central unit 14 forwards the number of RF paths m and the precoders $g_k^{(m)}$ to each base station k, k = 1, 2,...,K. The base station 13, 17 then performs downlink data transmission toward user equipment k.

In the following, an exemplary embodiment for computing the number of RF paths m and the precoder $g_k^{(m)}$, k = 1, 2,...,K in the central unit 14 is described.

$h_{k,j}^{(m)}$ describes the channel between user equipment k and base station j when the base station 13, 17 employs m RF paths. For sake of simplicity, it is assumed that the antennas of each base station are ordered and a base station 13, 17 simply transmits by using the first m antennas in case the base station 13, 17 employs m ≤ M RF paths. Thus, the channel matrix is

$$h_{k,j}^{(m)} = [h_{k,j}(1), h_{k,j}(2), \ldots, h_{k,j}(m)].$$

In other embodiments, e.g. the m employed antennas are optimized or the m RF paths outputs are mapped to all the M antennas by an analog RF beamformer.

As described above, in steps 21 and 26, the precoder $g_k^{(m)}$ is computed by the central unit 14 for each base station k with the aim of maximizing the signal-to-caused-interference-ratio, i.e.,

$$g_k^{(m)} = \operatorname*{argmax}_{g^{(m)}:\left\|g^{(m)}\right\|^2 = P} \frac{\left|h_{k,k}^{(m)}g^{(m)}\right|^2}{\sum_{j=1, j\neq k}^{N}\left|h_{j,k}^{(m)}g^{(m)}\right|^2 + \sigma_k^2},$$

where $\sigma_k^2$ is the estimate at the central unit of the power of thermal noise plus out-of-cluster interference suffered by user equipment k. This leads to

$$g_k^{(m)} = \frac{V_k^{(m)-1}h_{k,k}^{(m)H}}{\left\|V_k^{(m)-1}h_{k,k}^{(m)H}\right\|},$$

wherein

$$V_k^{(m)} = \sigma_k^2 I_M + P \sum_{j=1, j\neq k}^{K} h_{j,k}^{(m)H}h_{j,k}^{(m)}.$$

In steps 22 and 26 of the above described method, the central unit 14 estimates the spectral efficiency. In one embodiment, the signal-to-interference-plus-noise-ratio (SINR) for user equipment k is computed by

$$\hat{\mathrm{SINR}}_k^{(m)} = \frac{\left| h_{k,k}^{(m)} g_k^{(m)} \right|^2}{\sigma_k^2 + \displaystyle\sum_{j=1, j \neq k}^{k} \left| h_{k,j}^{(m)} g_j^{(m)} \right|^2} \; .$$

and the achievable spectral efficiency within the cluster is

$$\hat{R}^{(m)} = \sum_{k=1}^{K} \log_2 \left( 1 + \hat{\mathrm{SINR}}_k^{(m)} \right) \; .$$

The central unit selects the minimum number m of active RF paths to achieve the minimum target spectral efficiency Rmin in a recursive manner as described above.

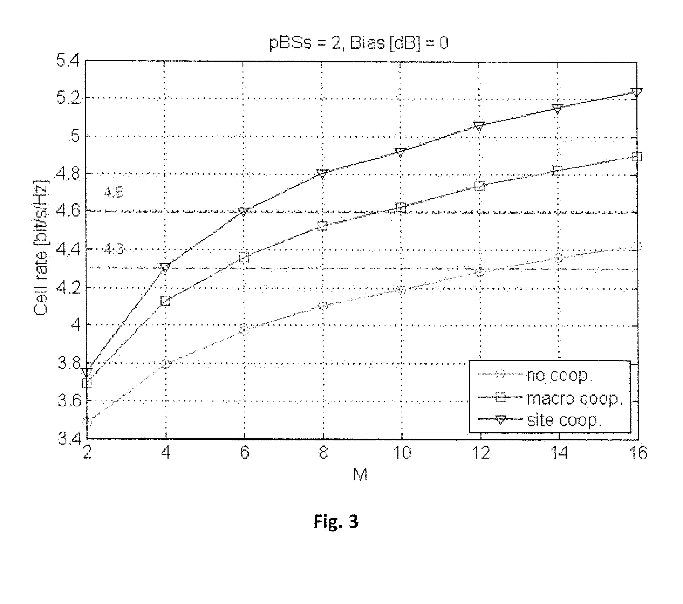

For this scenario, Fig. 3 shows simulated mean cell rates in the network as described in Fig. 1. The number of macro cell base stations 13, 17 was set to J=21, the number of pico cell base stations 16 was set to P=42. For simplicity, it is assumed that the number of antennas and the number of active RF paths are the same. Three different transmission strategies are employed. First, no cooperation is made among the base stations 13, 16, 17 (no coop.). Second, coordination is made among a macro cell base station 13, 17 and the pico cell base stations 16 in one geographical area 15 belonging to the macro cell base station 13, 17 (macro coop.). Third, coordination is made among the macro cell base station 13, 17 of the same site and the pico cell base stations 16 in their communication cell (site coop.).

For an exemplary value of Rmin=4.6 bit/s/Hz, the number of active RF paths is 6 if all geographical areas 15 in a communication cell 11, 12 are cooperating when computing precoders. This desired rate cannot even be reached with the maximum number of active RF paths (i.e. 16) if there is no cooperation. In another example (e.g. R_min =4.3 b/s/Hz) 12 active RF paths are required if there is no cooperation, whereas only 4 active RF paths are required to achieve the same target Rmin with site cooperation.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for communication in a cellular communication network (10), the cellular communication network (10) comprises at least one central unit (14) and at least two base stations (13, 17), at least one base station (13, 17) comprises multiple antennas and multiple RF paths feeding the antennas for MIMO transmission, the method comprises the steps of:

   determining at the central unit (14) the minimum number of RF paths in a base station (13, 17) to achieve a target performance metric when the base stations are coordinated (13, 17), and transmitting the determined minimum number to the base station (13, 17).

2. Method for communication in a cellular communication network according to claim 1, wherein determining at the central unit the minimum number of RF paths is based on at least one of channel state information, minimum and maximum number of available RF paths in the node.

3. Method for communication in a cellular communication network according to one of claims 1 and 2, wherein the step of determining at the central unit the minimum number of RF paths comprises the steps of:

computing precoders for a number of RF paths of a base station, estimating the performance metric of the base station with the computed precoders, and
reducing the number of RF paths if the performance metric estimation is above the target performance metric.

4. Method for communication in a cellular communication network according to claim 3, wherein the step of determining at the central unit the minimum number of RF paths further comprises:

performing the computing, estimating and reducing steps recursively until the transmission performance estimation is below the minimum performance metric, and
determining the minimum number of RF paths as the actual number of RF paths plus one.

5. Method for communication in a cellular communication network according to one of claims 1 and 4, wherein the functions of the central unit are implemented in the base station of a master cell.

6. Method for communication in a cellular communication network according to one of claims 1 and 5, wherein, in a base station, the number of antennas is at least equal to the number of RF paths.

7. Method for communication in a cellular communication network according to one of claims 1 and 6, wherein the central unit (14) coordinates macro base stations (13, 17) and pico base stations (16).

8. Method for communication in a cellular communication network according to one of claims 1 and 7, wherein the determining step is performed for all base stations which are attached to the central unit.

9. Central unit (14) in a cellular communication network (10), the cellular communication network (10) comprises at least one central unit (14) and at least two base stations (13, 17), at least one base station comprises multiple antennas and multiple RF paths feeding the antennas for MIMO transmission, the central unit comprises:

- a minimum number of RF paths calculator (18) for determining the minimum number of RF paths in a base station (13, 17) to achieve a target performance metric when the base stations are coordinated, and
- a transmitter for transmitting the minimum number to the base station (13, 17).

10. Central unit in a cellular communication network according to claim 9, wherein the minimum number of RF paths calculator further comprises:

- a precoder calculator for computing precoders for a number of RF paths of a base station,
- an estimator for estimating the transmission performance of the base station with the computed precoders, and
- a decrementer for decrementing the number of RF paths if the transmission estimation is above a minimum performance metric.

11. Central unit in a cellular communication network according to claim 10, wherein the minimum number of RF paths calculator further comprises:

- a close loop computing circuit comprising at least the precoder calculator, the estimator and the decrementer for recursively computing precoders, estimating the transmission performance and decrementing the number of RF paths until the transmission performance estimation is below the minimum rate, and
- a determinator for determining the minimum number of RF paths as the actual number of RF paths plus one.

12. Base station (13, 17) in a cellular communication network (10), the cellular communication network (10) comprises at least one central unit (14) and at least one base station (13, 17), the base station (13, 17) comprises multiple antennas and multiple RF paths feeding the antennas for MIMO transmission, the base station (13, 17) further comprises:

- an input for receiving a minimum number of RF paths from a central unit (14), the minimum number of RF paths being determined in the central unit (14) by using a target performance metric, and
- a switching unit for selectively switching on and off one or more RF paths according to the received minimum number.

13. Base station in a cellular communication network according to claim 12, wherein the input for receiving a minimum number of RF paths from a central unit receives a minimum number of RF paths which is determined in the central unit by computing precoders for a number of RF paths of a base station, estimating the transmission performance of the base station with the computed precoders, and
reducing the number of RF paths if the transmission performance estimation is above a minimum performance metric.

14. Base station in a cellular communication network according to claim 12 or 13, wherein the central unit is part of the base station.

15. System for communication in a cellular communication network, the system comprises at least one central unit according to claims 10 or 11 and at least one base station according to one of claims 12 to 14.

Fig. 1

EP 2 924 888 A1

Fig. 2

**Fig. 3**

Europäisches
Patentamt

European
Patent Office

Office européen
des brevets

## EUROPEAN SEARCH REPORT

Application Number

EP 14 30 5441

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 369 758 A1 (ERICSSON TELEFON AB L M [SE]) 28 September 2011 (2011-09-28) * paragraphs [0002], [0004], [0006], [0034], [0035], [0037]; figures 2,3-7 * ----- | 1-15 | INV. H04B7/06 H04B7/08 ADD. H04B7/02 |
| Y | WO 2013/123971 A1 (NOKIA SIEMENS NETWORKS OY [FI]; ZIRWAS WOLFGANG [DE]; REDANA SIMONE [D) 29 August 2013 (2013-08-29) * page 3, paragraph 3 * ----- | 1-15 | |

TECHNICAL FIELDS
SEARCHED      (IPC)

H04B
H04W

The present search report has been drawn up for all claims

| Place of search | Date of completion of the search | Examiner |
|---|---|---|
| Munich | 7 July 2014 | Brüchert, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 14 30 5441

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2014

| Patent document cited in search report | Publication date | Patent family member(s) | Publication date |
|---|---|---|---|
| EP 2369758 A1 | 28-09-2011 | NONE | |
| WO 2013123971 A1 | 29-08-2013 | NONE | |

EPO FORM P0459

For more details about this annex : see Official Journal of the European Patent Office, No. 12/82